# FASCICULE DE BREVET EUROPEEN

(11) **EP 2 602 533 B1**
(45) Date de publication et mention de la délivrance du brevet: **18.09.2019**
(21) Numéro de dépôt: 12195655.1
(22) Date de dépôt: 05.12.2012
(51) Int. Cl.: F16N 11/10, F16N 17/00, G01D 7/00, G01K 5/28, G01K 11/00

(54) **DISPOSITIF DE SIGNALEMENT D'ÉCHAUFFEMENT, ET SYSTÈME MÉCANIQUE ÉQUIPÉ D'UN TEL DISPOSITIF**
DEVICE TO INDICATE OVERHEATING, AND MECHANICAL SYSTEM PROVIDED WITH SUCH A DEVICE
ERHITZUNGSANZEIGEVORRICHTUNG, UND MIT EINER SOLCHEN VORRICHTUNG AUSGESTATTETES MECHANISCHES SYSTEM

(30) Priorité: 06.12.2011 FR 1161231
(43) Date de publication de la demande: 12.06.2013
(73) Titulaire: SKF Aerospace France, 26240 Saint-Vallier-sur-Rhône (FR); SKF Aeroengine France, 78180 Montigny le Bretonneux (FR)
(72) Inventeur: Carrerot, Hervé, 59970 Vicq (FR); Maheo, Yves, 26140 Anneyron (FR)
(74) Mandataire: Lavoix

(56) Documents cités:
- FR-A1- 2 911 168
- US-A- 401 531
- US-A- 2 553 814
- US-A- 2 556 042
- US-A- 3 062 176
- US-A- 3 231 317
- US-A- 3 727 045

## Description

La présente invention concerne un dispositif de signalement d'échauffement dans un système mécanique, par exemple un roulement, un palier ou une rotule. L'invention concerne également un système mécanique équipé d'un tel dispositif. Le domaine de l'invention est celui des systèmes de sécurité, en particulier dans le domaine de la maintenance aéronautique.

Des systèmes mécaniques du type roulement, palier ou rotule sont couramment intégrés à tous types d'équipements automobiles, ferroviaires, aéronautiques ou machines industrielles. Par exemple, le système mécanique peut être un roulement à billes intégré à un équipement aéronautique, tel qu'un rotor d'hélicoptère.

De manière connue, un tel système mécanique est susceptible de subir des échauffements en fonctionnement. Au dessus d'une température critique, certains éléments constitutifs du système peuvent être irrémédiablement endommagés. Le fonctionnement de l'équipement auquel le système est intégré est alors gêné, voire brutalement stoppé. Dans certains cas, un tel dysfonctionnement peut donc provoquer un accident grave.

Afin d'empêcher ou ralentir l'échauffement des systèmes mécaniques, il est connu de nombreux dispositifs de lubrification. Par ailleurs, le système mécanique peut être muni de dispositifs de signalement, tels que des capteurs de température, permettant d'anticiper ou de signaler un échauffement critique.

WO-A-2008 107 579 décrit un système mécanique équipé d'un dispositif autonome d'injection d'un fluide, en particulier un fluide de lubrification ou de refroidissement, dans le système en cas d'échauffement. Le dispositif comprend une charge pyrotechnique thermo-initiable génératrice de gaz de combustion disposée dans un logement. Le fluide est contenu dans un réservoir séparé, d'une part, de la charge par un piston mobile et, d'autre part, du système par un opercule. En atteignant une température prédéterminée d'allumage, la charge subit une combustion et les gaz générés pressurisent le fluide dans le réservoir. L'opercule se rompt sous la pression du fluide, qui est alors injecté dans le système mécanique. Toutefois, le déclenchement de la charge n'est pas facilement détectable depuis l'extérieur du dispositif ou du système, par exemple par un opérateur de maintenance, autrement que par des moyens électroniques coûteux. US3231317 A et US2553814 A décrivent d'autres exemples de dispositifs d'injection de fluide et de signalement en cas d'échauffement d'un système.

Le but de la présente invention est de proposer un dispositif de signalement d'un échauffement critique, atteint ou sur le point d'être atteint, par un système mécanique. En particulier, l'invention vise un dispositif performant et fiable dans des conditions de fonctionnement exigeantes, tout en étant peu coûteux et simple à mettre en oeuvre.

A cet effet, l'invention a pour objet un dispositif selon la revendication 1.

Ainsi, l'invention permet de signaler visuellement le déclenchement de la charge, correspondant à un échauffement du système mécanique au-delà d'une température critique prédéterminée, sans nécessiter des moyens électroniques coûteux et complexes. Plus précisément, le système mécanique peut subir un échauffement de contact entre ses éléments constitutifs en service. La composition de la charge, ainsi que la configuration des autres éléments constitutifs du dispositif, peuvent être adaptés pour que l'allumage de la charge se produise avant que le système atteigne la température critique, ou lorsque cette température critique est atteinte. Le signalement visuel est efficace, peu coûteux et pratique dans le cadre d'une opération de maintenance.

D'autres caractéristiques avantageuses du dispositif selon l'invention, prises isolément ou en combinaison, sont définies aux revendications 2 à 11.

L'invention a également pour objet un système mécanique susceptible de subir un échauffement de contact en fonctionnement, par exemple un roulement, un palier ou une rotule, caractérisé en ce que le système est équipé d'au moins un dispositif de signalement tel que mentionné ci-dessus.

L'invention a également pour objet un système mécanique susceptible de subir un échauffement de contact en fonctionnement, par exemple un roulement, un palier ou une rotule, caractérisé en ce que le système est équipé d'au moins un dispositif de signalement tel que mentionné ci-dessus, le dispositif de signalement comprenant des moyens de fixation du dispositif à un système mécanique, les moyens de fixation comprenant au moins une douille munie d'un filetage externe revêtu d'un film adhésif anti-desserrage, la douille du dispositif étant vissée dans un orifice taraudé ménagé dans le système mécanique, l'orifice taraudé étant ménagé de préférence dans une partie du système réalisée dans un acier présentant une résistance à la traction comprise entre 2400 et 2600 mégapascals, notamment de l'ordre de 2500 MPa.

Avantageusement, au moins un élément de freinage positif coopérant avec un dispositif de signalement est intégré au système mécanique, l'élément de freinage positif étant par exemple du type frein tôle ou fil à freiner.

L'invention sera mieux comprise à la lecture de la description qui va suivre, donnée uniquement à titre d'exemple non limitatif et faite en référence aux dessins annexés sur lesquels :
- la figure 1 est une vue en perspective d'un dispositif de signalement d'un échauffement, ce dispositif étant conforme à l'invention ;
- la figure 2 est une coupe axiale du dispositif dans le plan II à la figure 1, équipant un système mécanique, partiellement représenté, également conforme à l'invention ;
- la figure 3 est une vue en perspective à plus petite échelle du dispositif et du système de la figure 1 ;
- la figure 4 est un graphique illustrant le fonctionnement du dispositif des figures 1 à 3 ;
- la figure 5 est une coupe analogue à la figure 2 d'un dispositif conforme à un deuxième mode de réalisation de l'invention ; et
- la figure 6 est une couple analogue à la figure 2 d'un dispositif conforme à un exemple ne correspondant pas à l'invention.

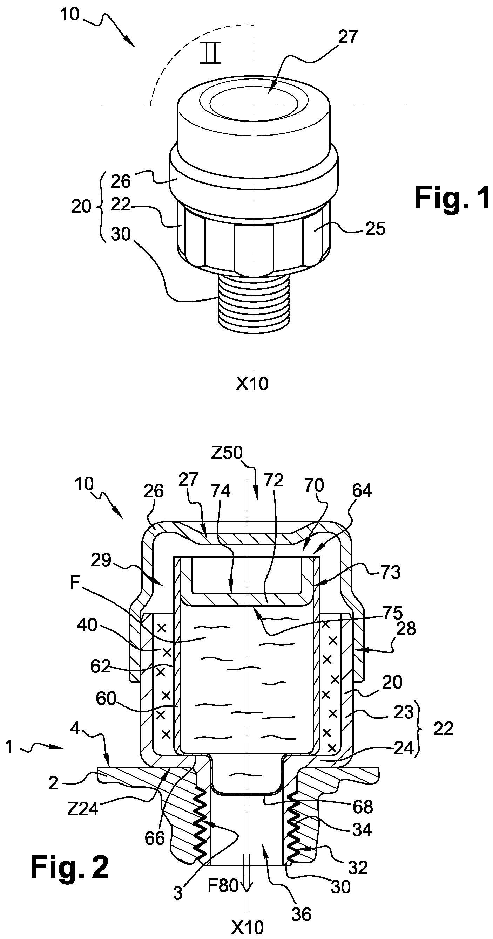

Sur les figures 1 à 3 est représenté un dispositif autonome 10, conforme à l'invention, de signalement d'un échauffement et de délivrance d'un fluide F.

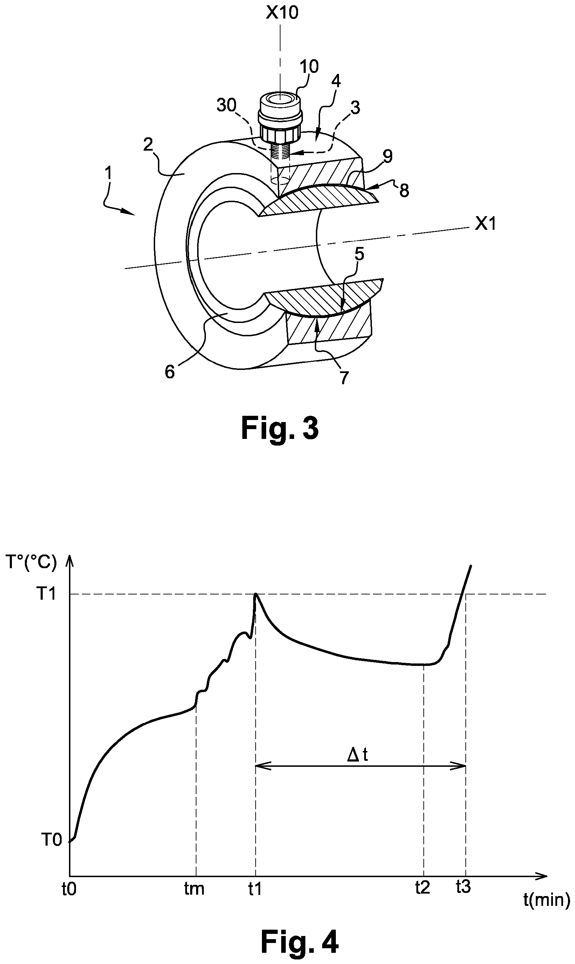

Plus précisément, le dispositif 10 est une cartouche miniaturisée destinée à équiper un système mécanique 1, également conforme à l'invention, susceptible de subir un échauffement. Le système 1 est, d'une part, partiellement représenté à la figure 2 dans un but de simplification et, d'autre part, entièrement représenté à la figure 3.

Sur l'exemple des figures 2 et 3, le système 1 est du type rotule mécanique, avec une bague externe 2 et une bague interne 6, respectivement fixe et mobile en fonctionnement. La bague externe 2 a une surface extérieure annulaire 4 centrée sur un axe X1, ainsi qu'une surface intérieure concave 5 de révolution autour de l'axe X1. La bague interne 6 a une surface extérieure 7 qui présente un profil sphérique tronqué et qui forme une liaison rotule, au niveau d'une interface de glissement 8, avec la surface intérieure 5 de la bague 2. Un orifice 3 au moins partiellement taraudé traverse la bague 2, reliant la surface extérieure 4 et la surface intérieure 5 de cette bague 2. De préférence, les bagues 2 et 6 sont fabriquées dans un acier à dureté très élevée, présentant une résistance à la traction comprise entre 2400 et 2600 mégapascals (MPa), encore de préférence de l'ordre de 2500 MPa.

En pratique, les mouvements au sein de la rotule 1 sont, d'une part, un mouvement de rotation de la bague 6 autour de l'axe X1 par rapport à la bague 2 et, d'autre part, un mouvement de rotulage de cette bague 6, dont l'axe central est alors incliné par rapport à l'axe X1. Les glissements répétés sous efforts au niveau de l'interface 8 provoquent un échauffement de contact, à une température qui est par exemple de l'ordre de 110°C à 150°C. Le mode de défaillance de la rotule 1 est le grippage, correspondant à un transfert de matière entre les deux bagues 2 et 6, jusqu'au soudage. Une lubrification à l'interface 8 est donc effectuée pour dissiper les échauffements de contact. De préférence, une bande 9 de tissu autolubrifiant est agencée à cet effet à l'interface 8. En alternative, l'interface 8 peut comprendre une lubrification fluide de type graisse ou huile.

La bande 9 est par exemple composée de polymère polytétrafluoroéthylène (PTFE) et de fibres de verre disposées dans une matrice polymère. La bande 9 peut être fixée rigidement à la surface 7 de la bague mobile 6 et frotter contre la surface 5 de la bague 2. Ce frottement provoque l'usure progressive de la bande 9, avec arrachement des particules de matière, notamment par filamentation du PTFE, fragmentation des fibres et effritement de la matrice. Les débris arrachés s'étalent au niveau de l'interface 8 et l'usure se poursuit jusqu'à élimination complète de la bande 9. A ce stade, le contact métal contre métal des bagues 2 et 6 entraîne le grippage et la fin de vie de la rotule 1. Avant le grippage, la température au niveau de l'interface 8 est par exemple de l'ordre de 100°C à 200°C, ce qui correspond à la température critique de la rotule 1. Cette température critique est facile à déterminer par des essais préalables, par exemple en utilisant une caméra thermique.

En fonctionnement de la rotule 1, la cartouche 10 vise à protéger les surfaces 5 et 7 et l'interface 8 des échauffements. A cet effet, le fluide F est, d'une part, initialement contenu dans la cartouche 10 au repos et, d'autre part, injecté depuis la cartouche 10 vers la rotule 1, sous certaines conditions opérationnelles, en fonctionnement de la rotule 1 et de la cartouche 10. La cartouche 10 vise également à signaler un échauffement au delà de la température critique par des moyens visuels, repérables notamment par un opérateur de maintenance examinant la rotule 1.

En variante non représentée, le système 1 peut être un autre système mécanique susceptible de subir des échauffements, par un exemple un roulement ou un palier.

Selon une autre variante non représentée, la cartouche 10 peut être positionnée en un autre emplacement du système 1, par exemple sur une face avant ou sur un logement d'un corps d'embout.

La cartouche 10 comprend un corps 20, un élément de signalement 27, une douille 30 de fixation de la cartouche 10 à la rotule 1, une charge thermo-initiable 40 potentiellement génératrice de gaz de combustion, un réservoir 60 adapté pour contenir le fluide F, des moyens 68 de délivrance du fluide F hors du réservoir 60, ainsi que des moyens intermédiaires 70 de compression du fluide F dans le réservoir 60. La cartouche 10 présente globalement une symétrie axiale autour d'un axe central X10.

Le corps 20 est centré sur l'axe X10 et comprend une base 22, un capuchon 26, ainsi que la douille 30 solidaire de la base 22. La base 22 comprend une paroi cylindrique 23 centrée sur l'axe X10 et une paroi radiale 24 perpendiculaire à l'axe X10. Optionnellement, la paroi 23 présente une surface extérieure munie de stries 25 facilitant la manipulation du corps 20. Une zone d'échauffement Z24 est délimitée du côté extérieur de la paroi 24, autour de la douille 30. Cette zone Z24 est prévue pour être positionnée au contact de la surface extérieure 4 de la rotule 1, afin qu'un transfert thermique puisse s'effectuer à travers la paroi 24 depuis l'interface 8 de la rotule 1 vers la charge 40. La base 22 est de préférence réalisée dans un matériau métallique à forte conductivité thermique, tel qu'un alliage de cuivre, de zinc et/ou d'aluminium, par exemple du laiton.

Le capuchon 26 forme une cuvette, dont la section dans un plan contenant l'axe X10 forme globalement un U inversé. La base 22 et le capuchon 26 délimitent ensemble un logement 29 ménagé à l'intérieur du corps 20. Dans le logement 29 sont disposés la charge 40, les moyens 70 et le réservoir 60 contenant le fluide F, le reste étant initialement rempli d'air non pressurisé. La base 22 et le capuchon 26 sont assemblés l'un avec l'autre et solidarisés au niveau d'une zone de jonction 28, par exemple par soudage ou collage. Sur l'exemple de la figure 2, la paroi du capuchon 26 recouvre partiellement la paroi 23 de la base 22. A titre d'exemple non limitatif, le diamètre maximal du corps 20 au niveau de la zone de jonction 28 est de l'ordre de 20 millimètres. Le capuchon 26 peut être fabriqué dans un matériau moins coûteux que la base 22.

En particulier, le capuchon 26 comprend à son sommet, autrement dit au creux du U, une partie 27 déformable sous l'effet d'une pression interne au corps 20, lorsque les gaz de combustion de la charge 40 se diffusent dans le logement 29. Avantageusement, la partie 27 est ménagée dans une zone périphérique extérieure Z50 de la cartouche 10. La résistance mécanique de la partie 27 peut être réduite sous l'effet d'un traitement thermique préalable au montage du capuchon 26 sur la base 22, ou en diminuant l'épaisseur de la partie 27 par rapport au reste du capuchon 26, ou par tout autre moyen adapté à la présente application. En alternative, la partie 27 peut être un élément rapporté sur le capuchon 26 dans la zone Z50, par exemple un élément en matière plastique déformable plastiquement sans rupture sous la pression et la température des gaz de combustion de la charge 40.

Ainsi, la combustion de la charge 40 peut être détectée visuellement depuis l'extérieur de la cartouche 10, simplement en examinant la zone Z50 lors d'une opération de maintenance, la partie 27 étant alors déformée vers l'extérieur du corps 20. En d'autres termes, la partie 27 constitue un élément de signalement visuel de combustion de la charge 40, cet élément de signalement visuel étant apparent au niveau de la zone périphérique Z50 extérieure de la cartouche 10 après combustion de la charge 40.

La douille 30 est solidaire de la base 22 et s'étend en saillie depuis la paroi 24, du côté opposé au capuchon 26. Plus précisément, la douille 30 forme une paroi cylindrique centrée sur l'axe X10 et comportant, d'une part, un filetage externe 32 et, d'autre part, un alésage interne délimitant un conduit 36 de délivrance du fluide F en dehors de la cartouche 10. A titre d'exemple non limitatif, le diamètre externe de la douille 30 est de l'ordre de 6 millimètres. Afin d'assurer une fixation optimale de la cartouche 10 à la rotule 1, le filetage externe 32 est revêtu d'un film adhésif anti-desserrage 34 puis vissé dans l'orifice 3 correspondant de la rotule 1, avec un couple maîtrisé. L'orifice 3, prévu spécifiquement pour recevoir la douille 30, est au moins partiellement taraudé. A titre d'exemple non limitatif, le film 34 appliqué sur le filetage 32 peut être une colle ou une pâte adhésive à fort pouvoir fixant, notamment une colle cyanoacrylate.

Le corps 20 et notamment la douille 30 sont configurés pour assurer une efficacité optimale en fonctionnement de la cartouche 10 et de la rotule 1. En particulier, le matériau et l'étendue de la zone Z24, le matériau et les dimensions de la douille 30, la précision dimensionnelle et la résistance mécanique du filetage 32, la nature et la quantité de film 34 appliqué sur le filetage 32, ainsi que le couple de serrage de la douille filetée 30 dans l'orifice 3 de la rotule 1, revêtent une importance particulière pour la mise en oeuvre de la cartouche 10. La douille 30 permet de fixer la cartouche 10 à la rotule 1 en assurant une résistance satisfaisante de la cartouche 10 aux sollicitations vibratoires qui lui sont transmises par la rotule 1, une étanchéité satisfaisante de la rotule 1 au niveau de l'orifice 3, ainsi que la délivrance du fluide F en une zone précise de l'interface 8 de la rotule 1. La zone Z24 permet un allumage rapide et précis de la charge 40 en réponse à un échauffement critique de la rotule 1.

Ainsi, la cartouche 10 présente un temps de réponse réduit, assure une intervention rapide en cas d'échauffement de la rotule 1 et limite les dommages potentiellement subis par les éléments constitutifs de la rotule 1 sous l'effet d'un échauffement critique. L'allumage de la charge est initiable sous l'effet d'un apport de chaleur prédéterminé par rapport à la température critique de la rotule 1, comme détaillé ci-après.

Avantageusement, la douille 30 est fabriquées dans un matériau présentant une limite d'élasticité à 0,2% de déformation Re_{0,2} comprise entre 500 et 700 mégapascal (MPa), de préférence entre 550 et 650 MPa, encore de préférence de l'ordre de 600 MPa. En outre, le matériau de la douille présente une résistance à la traction Rmax comprise entre 700 et 900 MPa, de préférence entre 750 et 850 MPa, encore de préférence de l'ordre de 800 MPa. De telles caractéristiques mécaniques peuvent être obtenue par exemple avec un alliage d'acier, avec ou sans traitement thermique. Ainsi, la douille 30 et son filetage 32 présentent une résistance satisfaisante aux contraintes mécaniques, vibratoires et thermiques subies au contact de la rotule 1.

En complément, un élément de freinage positif, non représenté, peut être intégré au système 1. Cet élément est par exemple du type frein tôle ou fil à freiner et coopère avec la cartouche 10, afin d'éviter un dévissage de cette cartouche 10 sous l'action des vibrations en fonctionnement du système 1.

Le réservoir 60 comprend une paroi cylindrique 62 qui est centrée sur l'axe X10 et qui s'étend entre une extrémité ouverte munie d'une ouverture circulaire 64 et une extrémité fermée constituée par une paroi radiale 66. De préférence, le réservoir 60 convenant au stockage du fluide F est composé d'un matériau à plus faible conductivité thermique que le matériau du corps 20 accueillant la charge 40. Ainsi, le fluide F à injecter peut être préservé de tout échauffement pouvant provenir des échauffements de la rotule 1 à protéger, au niveau de la zone d'échauffement Z24. Par exemple, le réservoir 60 peut être constitué en un matériau léger, tel un plastique.

Un opercule 68, constitué par exemple d'un film plastique ou métallique frangible, est ménagé sur la paroi 66 du réservoir 60. Lorsque le réservoir 60 est positionné sur la base 22, la paroi 66 s'appuie sur la surface intérieure de la paroi 24, tandis que l'opercule 68 s'étend en saillie à l'intérieur du conduit 36, perpendiculairement à l'axe X10. L'opercule 68 est alors localisé dans un volume délimité par les contours du filetage 32, en étant avantageusement rapproché de l'extrémité de sortie du conduit 36 et de l'interface 8 de la rotule 1. En alternative, l'opercule 68 peut être formé dans le même plan que la paroi 66, voire se substituer entièrement à la paroi 66. L'opercule 68 remplit une première fonction d'étanchéité du réservoir 60 et une deuxième fonction de délivrance, après rupture, du fluide F hors du réservoir 60. L'opercule 68 et le conduit 36 constituent les moyens de délivrance du fluide F hors du réservoir 60. La douille 30 peut être qualifiée de douille d'injection, dans la mesure où est elle traversée par le fluide F lors de sa délivrance.

De préférence, l'opercule 68 est non fragmentable en cas de rupture, autrement dit configuré pour se déchirer sans fragment sous l'effort de pressurisation du fluide F dans le réservoir 60. En effet, la migration de fragments d'opercule 68 vers l'interface 8 de la rotule 1, via le conduit 36, risquerait d'endommager la rotule 1.

Sur l'exemple de la figure 2, les moyens de compression 70 sont interposés entre le fluide F et le logement 29 contenant la charge 40. Ces moyens 70 sont nécessaires lorsque le mélange des gaz de combustion au fluide F à injecter est gênant et/ou lorsque l'injection du mélange de gaz de combustion et de fluide F peut poser des problèmes. Plus précisément, les moyens 70 comprennent un piston 72 initialement positionné dans le réservoir 60 au niveau de l'ouverture 64. Le piston 72 est muni d'une paroi cylindrique latérale 73 en appui contre la paroi 62, d'un premier côté 74 orienté vers le logement 29 et d'un deuxième côté 75 orienté vers l'intérieur du réservoir 60 et le fluide F. Le deuxième côté 75 est initialement disposé au contact du fluide F, qui subit alors une pression nulle ou faible. Lors du dégagement des gaz de combustion de la charge 40, la pression augmente dans le logement 29, rompant l'équilibre entre la pression exercée par le fluide F sur le côté 75 et la pression exercée par les gaz sur le côté 74. Le piston 72 se déplace dans le réservoir 60 avec la paroi 73 qui glisse contre la paroi 62, en comprimant le fluide F jusqu'à la rupture de l'opercule 68. Ensuite, le piston 72 continue de s'enfoncer dans le réservoir 60, avec un flux F80 de fluide F qui s'échappe du réservoir 60 par l'opercule percé 68, vers le conduit 34 et l'interface 8 de la rotule 1.

En variante non représentée aux figures 1 et 2, les moyens 70 peuvent comprendre une membrane déformable, ou tout autre élément adapté à la présente application.

Le fluide F peut être un agent de lubrification, de protection ou de refroidissement des éléments constitutifs de la rotule 1, au niveau de l'interface 8. Le fluide F peut consister en un liquide, une émulsion, un gel, une graisse ou une pâte, éventuellement chargé d'agents solides tels que des poudres. Le fluide F peut également consister en un mélange de plusieurs fluides de nature différente, notamment en un mélange d'au moins deux fluides choisis parmi ceux listés ci-dessus. A titre d'exemple, le fluide F est une graisse adaptée à la lubrification de l'interface 8 de contact entre les bagues 2 et 6 de la rotule 1. Autrement dit, le fluide F peut être tout type d'agent actif ou de mélange d'agents adaptés aux applications couvertes par l'invention. Les caractéristiques du fluide F, notamment sa viscosité, son potentiel lubrifiant et/ou son potentiel caloporteur, sont de préférence choisies spécifiquement pour l'application visée.

La charge 40 est disposée dans le logement 29 du corps 20, entre la paroi 23 de la base 22 et la paroi 66 du réservoir 60. Le volume exact du logement 29 occupé par la charge 40 dépend de sa composition et donc de l'application visée. Le reste du logement 29 est occupé par de l'air lorsque le capuchon 26 vient couvrir la base 22. En alternative, la charge 40 peut occuper une part plus ou moins importante du logement 29.

La charge 40 est génératrice de gaz de combustion lorsqu'elle brûle au-dessus d'une température prédéterminée. Il est connu de WO-A-2008 107 579 des charges thermo-initiable, dont l'allumage peut résulter d'un apport de chaleur externe ou être déclenché par une commande d'allumage à distance. Des paramètres tels que la quantité et la composition de la charge 40 influencent la cinématique d'injection du fluide F. Le choix du matériau de la base 22, en particulier au niveau de la zone Z24, participe également à la maîtrise du temps de réponse s'écoulant entre l'instant où survient un échauffement critique de la rotule 1, l'instant de la détection de cet échauffement critique correspondant à l'allumage de la charge 40 et l'instant de l'injection du fluide F dans la rotule 1.

A titre d'exemple pratique, si la température critique de la rotule 1 est de l'ordre de 200°C, la charge 40 peut être configurée pour que son allumage se produise à une température de 200°C, ou légèrement en dessous de la température critique, par exemple 195°C. Autrement dit, l'allumage de la charge est initiable sous l'effet d'un apport de chaleur prédéterminé par rapport à la température critique de la rotule 1. Une fois l'allumage effectué, la charge 40 brûle rapidement, entre quelques millisecondes à quelques secondes.

La gestion des différents paramètres mentionnés ci-dessus permet de fixer la température de thermo-initiation, de maîtriser la quantité de gaz générés et la pression des gaz avant injection du fluide, de quelques bars à plusieurs centaines de bars, de contrôler le temps de combustion de la charge 40, ainsi que de contrôler la durée et le débit de délivrance du fluide F. Le paramétrage de la cartouche 10 peut notamment être optimisé pour éviter l'injection prématurée du fluide F par des pics intempestifs de température. En d'autres termes, un retard réglable d'allumage de la charge 40 permet de ne pas déclencher l'auto-initiation de la composition lors de surchauffes ponctuelles de la rotule 1 non caractéristiques d'un dysfonctionnement, matérialisé par un échauffement au-delà de la température critique prédéterminé.

La génération de gaz de combustion de la charge 40 peut correspondre à deux modes principaux de mise en oeuvre. Selon un premier mode, le gaz provient uniquement de la combustion d'une charge thermo-initiable 40 génératrice de gaz, mélangeant par exemple thermite et composés générateurs de gaz. Selon un deuxième mode, le gaz provient de la combustion en série de charges superposées, lesquelles comprennent des parts variables de composés thermo-initiables sous l'effet d'un apport de chaleur de la rotule 1, de composés générateurs de gaz et de composés jouant le rôle de relais d'allumage. Par exemple, dans ce deuxième mode, la charge 40 peut comprendre un premier étage thermo-initiateur de combustion, un deuxième étage relais d'allumage et un troisième étage générateur de gaz de combustion.

De préférence, le dispositif 10 est autonome, c'est-à-dire démuni de commande d'allumage. Dans ce cas, l'allumage de la charge 40 est initiable uniquement sous l'effet d'un apport de chaleur, depuis la zone d'échauffement Z24 du corps 20 vers la charge 40.

En alternative, le dispositif 10 peut être équipé d'une commande d'allumage à distance.

En pratique, la montée en pression du fluide F dans le réservoir 60 est assuré par l'opercule 68, le piston 72 et les gaz de combustion. Le fluide F est libéré du réservoir 60 lors du déchirement de l'opercule 68, lorsque la pression du fluide F dans le réservoir 60 augmente au-dessus d'une pression prédéterminée.

Par ailleurs, un banc d'essai peut être utilisé pour tester différents paramétrages de la cartouche 10, lors d'une phase préparatoire de la fabrication de la cartouche 10 qui sera finalement intégrée à la rotule 1, comme expliqué ci-après en lien avec la figure 4.

Sur la figure 4 est représenté un graphique illustrant le fonctionnement de la cartouche 10, avec un paramétrage donné.

A cet effet, la cartouche 10 est fixée sur la rotule 1, elle-même montée sur un banc d'essai, non représenté dans un but de simplification. Le graphique de la figure 4 représente une température T° en degrés celsius (°C) de la rotule 1 en fonction du temps t en minutes (min). De préférence, l'évolution de la température T° est mesurée au niveau de l'interface 8 par une caméra thermique reliée à un ordinateur, également non représentés dans un but de simplification.

Afin de reproduire les applications aéronautiques visées, l'essai est mené avec une forte charge exercée sur la rotule 1, à savoir une pression de contact entre les bagues 2 et 6 qui est comprise entre 10 à 500 MPa, ainsi qu'une fréquence d'oscillation variant de 10 à 35 Hz

La rotation de la bague interne 6 démarre à un instant initial t₀, où l'interface 8 présente une température T0 correspondant aux conditions ambiantes de température et de pression. La température T° monte rapidement dans la rotule 1 en fonctionnement, puis plus progressivement, jusqu'à un instant tm d'usure complète de la bande 9 et d'apparition des premières microsoudures au niveau de l'interface 8. La température T° monte encore jusqu'à un instant t1 correspondant à une température critique T1 de déclenchement de la cartouche 10. A titre d'exemple non limitatif, l'instant t1 survient après 30 minutes environ, tandis que la température critique T1 est de l'ordre de 200°C. Entre l'allumage de la charge 40 et l'injection du fluide F dans la rotule 1, s'écoule une durée de l'ordre de quelques secondes, négligeable à l'échelle du graphique. La divergence thermique, matérialisant l'imminence du grippage de la rotule 1 par microsoudures, est stoppée. La température T° redescend aussitôt et ce pendant plusieurs minutes, sous l'effet du fluide F délivré à l'interface 8 de la rotule 1. Enfin, la température T° recommence à monter à un instant t2, où le fluide F est dissipé et/ou ses effets ne suffisent plus à empêcher l'échauffement de la rotule 1. A un instant t3, la température T° atteint de nouveau la température T1, mais sans nouvelle injection de fluide F possible.

A ce stade, les relevés indiquent que l'utilisation de la cartouche 10 a donné à la rotule 1 un sursis de fonctionnement durant un intervalle Δt de l'ordre de 30 minutes environ, entre les instants t1 et t2. Autrement dit, la durée de fonctionnement de la rotule 1 est doublée grâce à la cartouche 10.

En outre, la partie déformable 27 a été repoussée vers l'extérieur du corps 20 dans la zone périphérique Z50, sous l'action des gaz de combustion. Ainsi, la combustion de la charge 40 est repérable visuellement depuis l'extérieur de la cartouche 10. L'opérateur de maintenance peut donc facilement détecter le fait que la cartouche 10 est désormais inopérante et que la rotule 1 a subit un échauffement critique.

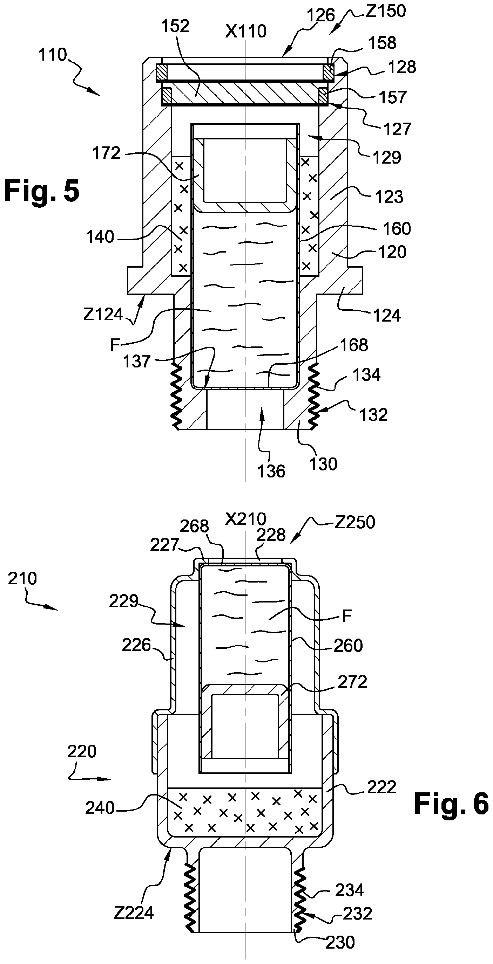

Sur la figure 5 est représenté un deuxième mode de réalisation d'un dispositif 110 selon l'invention.

Plus précisément, le dispositif 110 est une cartouche miniaturisée adaptée pour équiper un système mécanique 1, par exemple la rotule du premier mode de réalisation.

Certains éléments constitutifs de la cartouche 110 sont comparables aux éléments constitutifs de la cartouche 10 du premier mode de réalisation, décrit plus haut, et portent les mêmes références augmentées de 100. Il s'agit du corps 120 centré sur un axe X110, des parois 123 et 124, du logement 129, de la douille filetée 130, du filetage 132, du film 134, du conduit 136, de la charge 140, de la zone Z150, du réservoir 160, de l'opercule 168, ainsi que du piston 172 de compression du fluide F dans le réservoir 160. Les différences avec le premier mode de réalisation se retrouvent principalement au niveau de la structure du corps 120 et de la présence d'un élément 152 de signalement visuel du déclenchement de la charge 140.

La paroi 124 du corps 120 forme un épaulement en saillie externe par rapport à la paroi 123, de sorte que la zone d'échauffement Z124 est plus étendue que la zone Z24 du premier mode de réalisation. En alternative, la paroi 124 peut être plus ou moins étendue radialement en fonction, notamment, des contraintes de montage de la cartouche 110 sur le système 1. Au niveau de l'opercule 168, le réservoir 160 est en appui contre un épaulement 137 interne à la douille 130. La douille 130 est plus allongée que la douille 30, sans pour autant éloigner l'opercule 168 de la sortie du conduit 136. Lorsque la cartouche 110 est fabriquée avec une douille 130 encore plus allongée suivant l'axe X110, le réservoir 160 peut être allongé en fonction.

Le corps 120 ne comporte pas de capuchon 26 et de partie déformable 27. La zone périphérique d'extrémité Z150, ménagée sur le corps 120 du côté opposé à la douille 130, est munie de moyens de signalement visuel du déclenchement de la charge 140. Du côté de la zone Z150, le logement 128 comprend un alésage 127 présentant un diamètre plus important que le diamètre du reste du logement 129. Une rainure annulaire 128 est ménagée dans cet alésage 127. Un joint annulaire 157 est positionné dans l'alésage 127, puis un élément vitré 152 sensiblement annulaire est positionné contre le joint 157. Un autre joint annulaire 158 est ensuite positionné dans la rainure annulaire 128, de sorte que l'élément vitré soit logé entre les joints 157 et 158. L'état de la charge 140 et/ou les gaz de combustion sont ainsi visibles par transparence à travers l'élément vitré 152.

Autrement dit, la combustion de la charge 40 peut être détectée visuellement depuis l'extérieur de la cartouche 110 au niveau de la zone Z150, par exemple lors d'une opération de maintenance. L'élément vitré 152 constitue donc un élément de signalement visuel de combustion de la charge 140, apparent au niveau de la zone Z150 de la cartouche 110 après combustion de la charge 140.

En alternative, les moyens de signalement visuel peuvent être configurés de manière différente sans sortir du cadre de l'invention.

Selon une variante, l'élément 152 n'est pas transparent mais réalisé dans un matériau thermosensible changeant de couleur au contact des gaz de combustion.

Selon une autre variante, l'élément de signalement visuel est une capsule de peinture ou d'encre colorée placée dans le corps 120, au niveau de la vitre 152 intégrée au corps 120 dans la zone périphérique Z150. La capsule se rompt sous la pression des gaz de combustion, libérant ainsi la peinture ou l'encre colorée. Cette pression peut être directe ou subie via un élément mobile, par exemple un piston monté coulissant dans le corps 120, entre la vitre 152 et le réservoir 160.

Sur la figure 6 est représenté un exemple d'un dispositif 210 ne correspondant pas à l'invention.

Plus précisément, le dispositif 210 est une cartouche miniaturisée adaptée pour équiper un système mécanique 1, par exemple la rotule du premier mode de réalisation.

Certains éléments constitutifs de la cartouche 210 sont comparables aux éléments constitutifs de la cartouche 10 du premier mode de réalisation, décrit plus haut, et portent les mêmes références augmentées de 200. Il s'agit du corps 220 centré sur un axe X210, de la base 222, de la paroi radiale 224, du capuchon 226, du logement 229, de la douille filetée 230, du filetage 232, du film 234, de la charge 240, de la zone Z250, du réservoir 260, de l'opercule 268, ainsi que du piston 272 de compression du fluide F dans le réservoir 260.

La principale différence avec les modes de réalisation est que la cartouche 210 ne vise pas à protéger le système 1, mais uniquement à signaler un échauffement du système 1 au delà de sa température critique par des moyens visuels. Dans ces conditions, la cartouche 210 ne comprend pas un réservoir de fluide à injecter dans le système. La paroi radiale 224 de la base 222 s'étend de part et d'autre de l'axe X210 et sépare le logement 229 et la douille 230.

En revanche, le fluide F compris dans le réservoir 260 peut être libéré hors de la cartouche 210, dans une zone périphérique Z250 extérieure du capuchon 226 de la cartouche 210, afin de signaler le déclenchement de la charge 240. Le réservoir 260 est en appui sur un épaulement 227 ménagé sur le capuchon 226 au niveau de la zone Z250. La surface interne du capuchon 226 peut enserrer le réservoir 260 sur une surface plus ou moins importante, ce qui réduit d'autant le volume du logement 229. Par exemple, le réservoir 260 peut remplir tout le volume interne du capuchon 226. L'opercule 268 de délivrance du fluide F hors du réservoir 260 est directement interposé entre le réservoir 260 et la zone périphérique Z250, avec une ouverture 228 ménagée dans le capuchon 226. En alternative, la cartouche 210 peut comprendre un conduit dans lequel est disposé l'opercule 268, ce conduit reliant le réservoir 260 à la zone Z250.

Le fluide F est de préférence une peinture ou une encre colorée, par exemple de la peinture rouge facilement repérable par l'opérateur de maintenance. Ainsi, la combustion de la charge 240 peut être détectée visuellement depuis l'extérieur de la cartouche 210 lors d'une opération de maintenance, simplement en examinant la zone Z250 couverte de peinture. En d'autres termes, le fluide F constitue un élément de signalement visuel de combustion de la charge 240, cet élément de signalement visuel étant apparent au niveau de la zone périphérique Z250 extérieure de la cartouche 210 après combustion de la charge 240.

En outre, les caractéristiques techniques des différents modes de réalisation peuvent être, en totalité ou pour certaines d'entre elles, combinées entre elles. Ainsi, le dispositif de signalement et le système mécanique peuvent être adaptés à une application particulière, notamment en termes de coût, d'encombrement et de contraintes opérationnelles.

Selon une variante particulière combinant les différents modes de réalisation, le dispositif comprend un premier réservoir contenant un premier fluide de signalement prévue pour être libéré à l'extérieur du dispositif, par exemple de la peinture ou de l'encre colorée, ainsi qu'un deuxième réservoir contenant un deuxième fluide prévu pour être injecté à l'intérieur du système mécanique, par exemple de la graisse ou de l'huile. Les moyens de délivrance du premier fluide hors du premier réservoir relient le premier réservoir à la zone périphérique de signalement visuel et peuvent libérée le premier fluide pressurisé par l'action, directe ou via un premier organe intermédiaire mobile dans le premier réservoir, des gaz de combustion. Le dispositif comprend également des moyens de délivrance du second fluide pressurisé hors du second réservoir par l'action, directe ou via un second organe intermédiaire mobile dans le second réservoir, des gaz de combustion. Autrement dit, le déclenchement de la charge provoque quasi-simultanément la délivrance du premier fluide et du deuxième fluide. Dans ce cas, l'élément de signalement visuel est le premier fluide, qui est libéré au niveau de la zone périphérique après combustion de la charge.

On remarque que dans le premier et le deuxième modes de réalisation, les moyens de signalement de l'échauffement sont distincts et distants du réservoir et du fluide, alors que dans l'exemple et dans la variante particulière décrite ci-dessus, les moyens de signalement comprennent le fluide.

Selon une autre variante non représentée, les cartouches peuvent être positionnées sur les faces avant des rotules, sur un logement ménagé dans un corps d'embout, ou en tout autre point des systèmes mécaniques adapté à la présente application.

Selon une autre variante non représentée, au moins un élément de freinage positif, par exemple du type frein tôle ou fil à freiner, peut être intégré au système 1. Chaque cartouche peut être équipée d'un tel élément, afin d'empêcher son dévissage sous l'action des vibrations en fonctionnement du système 1. Cet élément est alors complémentaire des moyens de fixation, à savoir la douille filetée et le film adhésif anti-desserrage.

En fonction du mode de réalisation, l'invention peut avantageusement être mise en oeuvre dans des contextes de maintenance préventive, de sauvegarde et/ou de protection de systèmes mécaniques susceptibles de subir des échauffements.

## Revendications

1. Dispositif (10 ; 110 ; 210) de signalement d'échauffement dans un système mécanique (1) susceptible de subir un échauffement de contact en fonctionnement, par exemple un roulement, un palier ou une rotule, le dispositif de signalement (10 ; 110 ; 210) comprenant au moins :
- un corps (20 ; 120 ; 220) contenant une charge thermo-initiable (40 ; 140 ; 240) génératrice de gaz de combustion, un allumage de la charge (40 ; 140 ; 240) étant initiable sous l'effet d'un apport de chaleur prédéterminé, depuis une zone d'échauffement (Z24 ; Z124 ; Z224) du corps (20 ; 120 ; 220) vers la charge (40 ; 140 ; 240), ou sous l'action d'une commande d'allumage,
- un réservoir (60 ; 160 ; 260) contenant un fluide (F), et des moyens (36, 68 ; 136, 168 ; 228, 268) de délivrance du fluide (F) pressurisé hors du réservoir par l'action, directe ou via un organe intermédiaire (72 ; 172 ; 272) mobile à l'intérieur du réservoir, des gaz de combustion,
- des moyens (30, 32, 34 ; 130, 132, 134 ; 230, 232, 234) de fixation du dispositif de signalement (10 ; 110 ; 210) à un système mécanique (1), les moyens de fixation étant adaptés pour mettre le réservoir (60 ; 160) en communication fluidique avec le système mécanique (1) et pour positionner le corps (20 ; 120 ; 224) contre le système mécanique (1) au niveau de la zone d'échauffement (Z24 ; Z124 ; Z224),
**caractérisé en ce que** :
- le dispositif de signalement (10 ; 110 ; 210) comprend au moins un élément (27 ; 152 ; F) de signalement visuel de la combustion de la charge (40 ; 140 ; 240), l'élément de signalement visuel étant apparent au niveau d'une zone périphérique extérieure (Z50 ; Z150 ; Z250) du dispositif de signalement après combustion de la charge, et
- les moyens de fixation comprennent au moins une douille d'injection (30 ; 130 ; 230) munie d'un filetage externe (32 ; 132 ; 232) revêtu d'un film adhésif anti-desserrage (34 ; 134 ; 234).

2. Dispositif de signalement (10) selon la revendication 1, **caractérisé en ce que** l'élément de signalement visuel est une partie (27) du corps (20) déformable sous l'action d'une pression interne au corps (20), la partie déformable (27) étant repoussée vers l'extérieur du corps (20) dans la zone périphérique (Z50) par les gaz de combustion.

3. Dispositif de signalement (110) selon la revendication 1, **caractérisé en ce que** l'élément de signalement visuel est une vitre (152) agencée dans la zone périphérique (Z150), la charge (140) et/ou les gaz de combustion étant visibles à travers la vitre (152).

4. Dispositif de signalement (110) selon la revendication 1, **caractérisé en ce que** l'élément de signalement visuel (150) est réalisé dans un matériau thermosensible changeant de couleur au contact des gaz de combustion.

5. Dispositif de signalement (110) selon la revendication 1, **caractérisé en ce que** l'élément de signalement visuel est une capsule de peinture ou d'encre colorée disposée dans le corps (120), au niveau d'une vitre (152) intégrée au corps (120) dans la zone périphérique (Z150), la capsule se rompant contre la vitre (152) sous la pression, directe ou via un élément mobile, des gaz de combustion.

6. Dispositif de signalement (210) selon la revendication 1, **caractérisé en ce que** les moyens (268) de délivrance du fluide (F) hors du réservoir (260) sont interposés entre le réservoir (260) et la zone périphérique (Z250) et **en ce que** l'élément de signalement visuel est le fluide (F) qui est libéré au niveau de la zone périphérique (Z250) après combustion de la charge (240).

7. Dispositif de signalement (210) selon la revendication 6, **caractérisé en ce que** le fluide (F) est une peinture ou une encre colorée.

8. Dispositif de signalement (210) selon l'une des revendications 6 ou 7, **caractérisé en ce qu'**il comprend :
- un second réservoir contenant un second fluide, et
- des moyens de délivrance du second fluide pressurisé hors du second réservoir par l'action, directe ou via un second organe intermédiaire mobile dans le second réservoir, des gaz de combustion.

9. Dispositif de signalement (10 ; 110 ; 210) selon l'une des revendications précédentes, **caractérisé en ce que** le dispositif de signalement (10 ; 110 ; 210) est autonome, l'allumage de la charge (40 ; 140 ; 240) étant initiable uniquement sous l'effet d'un apport de chaleur, depuis une zone d'échauffement (Z24 ; Z124 ; Z224) du corps (20 ; 120 ; 220), vers la charge (40 ; 140 ; 240).

10. Dispositif de signalement (10 ; 110 ; 210) selon l'une des revendications précédentes, **caractérisé en ce que** les moyens (36, 68 ; 136, 168 ; 228, 268) de délivrance du fluide (F) pressurisé hors du réservoir (60 ; 160 ; 260) comprennent un opercule (68 ; 168 ; 268) non fragmentable, qui obture initialement le réservoir et se rompt lorsque la pression du fluide (F) dans le réservoir (60 ; 160 ; 260) dépasse un seuil de pression prédéterminé.

11. Dispositif de signalement (10 ; 110 ; 210) selon l'une des revendications précédentes, **caractérisé en ce que** la douille d'injection (30 ; 130 ; 230) est constituée par un matériau présentant, d'une part, une limite d'élasticité à 0,2% de déformation Re_{0,2} comprise entre 500 et 700 MPa et, d'autre part, une résistance à la traction Rmax comprise entre 700 et 900 MPa.

12. Système mécanique (1) susceptible de subir un échauffement de contact en fonctionnement, par exemple un roulement, un palier ou une rotule, **caractérisé en ce que** le système (1) est équipé d'au moins un dispositif de signalement (10 ; 110 ; 210) selon l'une des revendications précédentes.

13. Système mécanique (1) susceptible de subir un échauffement de contact en fonctionnement, par exemple un roulement, un palier ou une rotule, **caractérisé en ce que** le système (1) est équipé d'au moins un dispositif de signalement (10 ; 110 ; 210) selon l'une des revendications1 à 11, la douille (30 ; 130 ; 230) du dispositif (10 ; 110 ; 210) étant vissée dans un orifice taraudé (3) ménagé dans le système mécanique (1), l'orifice taraudé (3) étant ménagé de préférence dans une partie (2) du système (1) réalisée dans un acier présentant une résistance à la traction comprise entre 2400 et 2600 mégapascals (MPa), notamment de l'ordre de 2500 MPa.

14. Système mécanique (1) selon l'une des revendications 12 ou 13, **caractérisé en ce qu'**au moins un élément de freinage positif coopérant avec un dispositif de signalement (10 ; 110 ; 210) est intégré au système mécanique (1 ; 101 ; 201 ; 301 ; 401 ; 501 ; 601), l'élément de freinage positif étant par exemple du type frein tôle ou fil à freiner.

## Patentansprüche

1. Vorrichtung (10; 110; 210) zur Anzeige einer Erhitzung in einem mechanischen System (1), das im Betrieb eine Kontakterhitzung erfahren kann, zum Beispiel einem Wälzlager, einem Lager oder einem Kugelgelenk, wobei die Anzeigevorrichtung (10; 110; 210) wenigstens umfasst:
- einen Körper (20; 120; 220), der eine thermisch initiierbare Ladung (40; 140; 240) enthält, die Verbrennungsgas erzeugt, wobei eine Zündung der Ladung (40; 140; 240) unter der Einwirkung einer vorbestimmten Wärmezufuhr von einem Erwärmungsbereich (Z24; Z124; Z224) des Körpers (20; 120; 220) zu der Ladung (40; 140; 240) oder unter der Wirkung eines Zündbefehls initiierbar ist,
- einen Behälter (60; 160; 260), der ein Fluid (F) enthält, und Mittel (36, 68; 136, 168; 228, 268) zur Förderung des druckbeaufschlagten Fluids (F) aus dem Behälter hinaus durch direkte oder über ein bewegliches Zwischenorgan (72; 172; 272) im Inneren des Behälters erfolgende Einwirkung der Verbrennungsgase,
- Mittel (30, 32, 34; 130, 132, 134; 230, 232, 234) zur Befestigung der Anzeigevorrichtung (10; 110; 210) an einem mechanischen System (1), wobei die Befestigungsmittel dafür ausgelegt sind, den Behälter (60; 160) in Fluidverbindung mit dem mechanischen System (1) zu bringen und den Körper (20; 120; 224) am Erwärmungsbereich (Z24; Z124; Z224) an dem mechanischen System (1) anliegend zu positionieren,
**dadurch gekennzeichnet, dass**:
- die Anzeigevorrichtung (10; 110; 210) wenigstens ein Element (27; 152; F) zur visuellen Anzeige der Verbrennung der Ladung (40; 140; 240) umfasst, wobei das Element zur visuellen Anzeige nach Verbrennung der Ladung an einem äußeren Umfangsbereich (Z50; Z150; Z250) der Anzeigevorrichtung sichtbar ist, und
- die Befestigungsmittel wenigstens eine Einspritzhülse (30; 130; 230) umfassen, die mit einem Außengewinde (32; 132; 232) versehen ist, das mit einem Film eines Gewindesicherungsklebers (34; 134; 234) überzogen ist.

2. Anzeigevorrichtung (10) nach Anspruch 1, **dadurch gekennzeichnet, dass** das Element zur visuellen Anzeige ein Teil (27) des Körpers (20) ist, der unter der Einwirkung eines Innendrucks auf den Körper (20) verformbar ist, wobei der verformbare Teil (27) durch die Verbrennungsgase im Umfangsbereich (Z50) zur Außenseite des Körpers (20) hin zurückgeschoben wird.

3. Anzeigevorrichtung (110) nach Anspruch 1, **dadurch gekennzeichnet, dass** das Element zur visuellen Anzeige eine Glasscheibe (152) ist, die im Umfangsbereich (Z150) angeordnet ist, wobei die Ladung (140) und/oder die Verbrennungsgase durch die Glasscheibe (152) hindurch sichtbar sind.

4. Anzeigevorrichtung (110) nach Anspruch 1, **dadurch gekennzeichnet, dass** das Element zur visuellen Anzeige (150) aus einem temperaturempfindlichen Material hergestellt ist, das beim Kontakt mit den Verbrennungsgasen seine Farbe ändert.

5. Anzeigevorrichtung (110) nach Anspruch 1, **dadurch gekennzeichnet, dass** das Element zur visuellen Anzeige eine Kapsel mit Farbe oder farbiger Tinte ist, die im Körper (120) an einer in den Körper (120) integrierten Glasscheibe (152) im Umfangsbereich (Z150) angeordnet ist, wobei die Kapsel unter dem direkten oder über ein bewegliches Element einwirkenden Druck der Verbrennungsgase an der Glasscheibe (152) zerbricht.

6. Anzeigevorrichtung (210) nach Anspruch 1, **dadurch gekennzeichnet, dass** die Mittel (268) zur Förderung des Fluids (F) aus dem Behälter (260) hinaus zwischen dem Behälter (260) und dem Umfangsbereich (Z250) angeordnet sind, und dadurch, dass das Element zur visuellen Anzeige das Fluid (F) ist, welches nach Verbrennung der Ladung (240) am Umfangsbereich (Z250) freigesetzt wird.

7. Anzeigevorrichtung (210) nach Anspruch 6, **dadurch gekennzeichnet, dass** das Fluid (F) eine Farbe oder eine farbige Tinte ist.

8. Anzeigevorrichtung (210) nach einem der Ansprüche 6 oder 7, **dadurch gekennzeichnet, dass** sie umfasst:
- einen zweiten Behälter, der ein zweites Fluid enthält, und
- Mittel zur Förderung des druckbeaufschlagten zweiten Fluids aus dem zweiten Behälter hinaus durch direkte oder über ein zweites bewegliches Zwischenorgan im zweiten Behälter erfolgende Einwirkung der Verbrennungsgase.

9. Anzeigevorrichtung (10; 110; 210) nach einem der vorhergehenden Ansprüche, **dadurch gekennzeichnet, dass** die Anzeigevorrichtung (10; 110; 210) autonom ist, wobei die Zündung der Ladung (40; 140; 240) ausschließlich unter der Einwirkung einer Wärmezufuhr von einem Erwärmungsbereich (Z24; Z124; Z224) des Körpers (20; 120; 220) zu der Ladung (40; 140; 240) initiierbar ist.

10. Anzeigevorrichtung (10; 110; 210) nach einem der vorhergehenden Ansprüche, **dadurch gekennzeichnet, dass** die Mittel (36, 68; 136, 168; 228, 268) zur Förderung des druckbeaufschlagten Fluids (F) aus dem Behälter (60; 160; 260) hinaus einen nicht zerlegbaren Verschlussdeckel (68; 168; 268) umfassen, welcher zu Beginn den Behälter verschließt und welcher bricht, wenn der Druck des Fluids (F) im Behälter (60; 160; 260) einen vorbestimmten Schwellenwert überschreitet.

11. Anzeigevorrichtung (10; 110; 210) nach einem der vorhergehenden Ansprüche, **dadurch gekennzeichnet, dass** die Einspritzhülse (30; 130; 230) aus einem Material besteht, das einerseits eine 0,2%-Dehngrenze Re_{0,2} zwischen 500 und 700 MPa und andererseits eine Zugfestigkeit Rmax zwischen 700 und 900 MPa aufweist.

12. Mechanisches System (1), das im Betrieb eine Kontakterhitzung erfahren kann, zum Beispiel ein Wälzlager, ein Lager oder ein Kugelgelenk, **dadurch gekennzeichnet, dass** das System (1) mit wenigstens einer Anzeigevorrichtung (10; 110; 210) nach einem der vorhergehenden Ansprüche ausgestattet ist.

13. Mechanisches System (1), das im Betrieb eine Kontakterhitzung erfahren kann, zum Beispiel ein Wälzlager, ein Lager oder ein Kugelgelenk, **dadurch gekennzeichnet, dass** das System (1) mit wenigstens einer Anzeigevorrichtung (10; 110; 210) nach einem der Ansprüche 1 bis 11 ausgestattet ist, wobei die Hülse (30; 130; 230) der Vorrichtung (10; 110; 210) in eine Gewindebohrung (3) eingeschraubt ist, die in dem mechanischen System (1) ausgebildet ist, wobei die Gewindebohrung (3) vorzugsweise in einem aus Stahl hergestellten Teil (2) des Systems (1) ausgebildet ist, der eine Zugfestigkeit zwischen 2400 und 2600 Megapascal (MPa) aufweist und insbesondere in der Größenordnung von 2500 MPa liegt.

14. Mechanisches System (1) nach einem der Ansprüche 12 oder 13, **dadurch gekennzeichnet, dass** wenigstens ein positives Bremselement, das mit einer Anzeigevorrichtung (10; 110; 210) zusammenwirkt, in das mechanische System (1; 101; 201; 301; 401; 501; 601) integriert ist, wobei das positive Bremselement zum Beispiel vom Typ eines Bremsbleches oder eines Bremsdrahtes ist.

## Claims

1. Device (10; 110; 210) for indicating heating in a mechanical system (1) liable to experience contact heating in operation, for example a rolling bearing, a plane bearing or a ball joint, the indicating device (10; 110; 210) comprising at least:
- a body (20; 120; 220) containing a thermally initiable charge (40 140; 240) that generates a combustion gas, ignition of the charge (40; 140; 240) being able to be initiated under the effect of a predetermined addition of heat, from a heating zone (Z24; Z124; Z224) of the body (20; 120; 220) towards the charge (40;; 140; 240), or under the action of an ignition command,
- a reservoir (60; 160; 260) containing a fluid (F), and means (36, 68; 136, 168; 228, 268) for delivering pressurized fluid (F) out of the reservoir through the action, either direct or via an intermediate member (72; 172; 272) able to move inside the reservoir, of the combustion gases,
- means (30, 32, 34; 130, 132, 134; 230, 232, 234) for attaching the indicating device (10; 110; 210) to a mechanical system (1), the attachment means being designed to place the reservoir (60; 160) in fluidic communication with the mechanical system (1) and to position the body (20; 120; 224) against the mechanical system (1) in the region of the heating zone (Z24; Z124; Z224),
**characterized in that**:
- the indicating device (10; 110; 210) comprises at least one element (27; 152; F) visually indicating the combustion of the charge (40; 140; 240), the visual-indication element being visible at an exterior peripheral zone (Z50; Z150; Z250) of the indicating device after combustion of the charge, and
- the attachment means comprise at least one injection bushing (30; 130; 230) provided with an external screw thread (32; 132; 232) coated with a thread locking adhesive film (34; 134; 234) to prevent loosening.

2. Indicating device (10) according to Claim 1, **characterized in that** the visual indication element is a part (27) of the body (20) that can deform under the action of a pressure internal to the body (20), the deformable part (27) being pushed towards the outside of the body (20) in the peripheral zone (Z50) by the combustion gases.

3. Indicating device (110) according to Claim 1, **characterized in that** the visual indication element is a window (152) arranged in the peripheral zone (Z150), the charge (140) and/or the combustion gases being visible through the window (152).

4. Indicating device (110) according to Claim 1, **characterized in that** the visual indication element (150) is made of a heat-sensitive material that changes colour upon contact with the combustion gases.

5. Indicating device (110) according to Claim 1, **characterized in that** the visual indicating element is a capsule of coloured paint or ink placed in the body (120), at the level of a window (152) incorporated into the body (120) in the peripheral zone (Z150), the capsule breaking against the window (152) under the pressure, either direct or via a mobile element, of the combustion gases.

6. Indicating device (210) according to Claim 1, **characterized in that** the means (268) for delivering the fluid (F) out of the reservoir (260) are interposed between the reservoir (260) and the peripheral zone (Z250), and **in that** the visual indication element is the fluid (F) which is released in the peripheral zone (Z250) following combustion of the charge (240).

7. Indicating device (210) according to Claim 6, **characterized in that** the fluid (F) is a coloured ink or paint.

8. Indicating device (210) according to one of Claims 6 and 7, **characterized in that** it comprises:
- a second reservoir containing a second fluid, and
- means for delivering the pressurized second fluid out of the second reservoir through the action, direct or via a second intermediate member able to move in the second reservoir, of the combustion gases.

9. Indicating device (10; 110; 210) according to one of the preceding claims, **characterized in that** the indicating device (10; 110; 210) is autonomous, ignition of the charge (40; 140; 240) being able to be initiated only under the effect of an addition of heat, from a heating zone (Z24; Z124; Z224) of the body (20; 120; 220) towards the charge (40; 140; 240).

10. Indicating device (10; 110; 210) according to one of the preceding claims, **characterized in that** the means (36, 68; 136, 168; 228, 268) for delivering the pressurized fluid (F) out of the reservoir (60; 160; 260) comprise a non-fragmentable rupture disc (68; 168; 268) which initially closes off the reservoir and which ruptures when the pressure of the fluid (F) in the reservoir (60; 160; 260) exceeds a predetermined pressure threshold.

11. Indicating device (10; 110; 210) according to one of the preceding claims, **characterized in that** the injection bushing (30; 130; 230) is made of a material which, on the one hand, has an elastic limit at 0.2% strain Re_{0.2} comprised between 500 and 700 MPa and, on the other hand, has a tensile strength Rmax comprised between 700 and 900 MPa.

12. Mechanical system (1) liable to experience contact heating in operation, for example a rolling bearing, a plane bearing or a ball joint, **characterized in that** the system (1) is equipped with at least one indicating device (10; 110; 210) according to one of the preceding claims.

13. Mechanical system (1) liable to experience contact heating in operation, for example a rolling bearing, a plane bearing or a ball joint, **characterized in that** the system (1) is equipped with at least one indicating device (10; 110; 210) according to one of Claims 1 to 11, the bushing (30; 130; 230) of the device (10; 110; 210) being screwed into a tapped orifice (3) formed in the mechanical system (1), the tapped orifice (3) preferably being formed in a part (2) of the system (1) that is made in a steel having a tensile strength comprised between 2400 and 2600 megapascals (MPa), notably of the order of 2500 MPa.

14. Mechanical system (1) according to one of Claims 12 and 13, **characterized in that** at least one positive-locking element collaborating with an indicating device (10; 110; 210) is incorporated into the mechanical system (1; 101; 201; 301; 401; 501; 601), the positive- element being, for example, of the wire or plate type.
